# EUROPÄISCHE PATENTSCHRIFT

(11) **EP 3 145 655 B1**
(45) Veröffentlichungstag und Bekanntmachung des Hinweises auf die Patenterteilung: **08.01.2020**
(21) Anmeldenummer: 15727911.8
(22) Anmeldetag: 22.05.2015
(51) Int. Cl.: B21D 25/00, F16C 29/00

(54) **VORRICHTUNG IN FORM EINER KOLBENEINHEIT UND VERFAHREN ZU DEREN BETRIEB**
DEVICE IN THE FORM OF A PISTON UNIT AND METHOD OF USING IT
DISPOSITIF EN FORME D'UNITÉ DE PISTON ET SA MÉTHODE D'UTILISATION

(30) Priorität: 22.05.2014 DE 102014209804
(43) Veröffentlichungstag der Anmeldung: 29.03.2017
(73) Patentinhaber: SMS group GmbH, 40237 Düsseldorf (DE)
(72) Erfinder: HÜSGEN, David, 41352 Korschenbroich (DE); HOPPENKAMPS, Nikolaus, 40489 Düsseldorf (DE)
(74) Vertreter: Kross, Ulrich
(86) Internationale Anmeldenummer: PCT/EP2015/061445
(87) Internationale Veröffentlichungsnummer: WO 2015/177355

(56) Entgegenhaltungen:
- EP-A2- 0 940 584
- DE-A1- 2 117 104
- US-A- 3 125 151
- US-A1- 2007 057 119

## Beschreibung

Die Erfindung betrifft eine Vorrichtung in Form einer Kolbeneinheit mit einer Kolbenstange, einem die Kolbenstange umgebenden inneren Zylinder und einem die Kolbenstange ebenfalls umgebenden äußeren Hohlkolben, wobei der innere Zylinder innerhalb und außerhalb des äußeren Hohlkolbens relativ zu dem äußeren Hohlkolben auf der Kolbenstange axial verfahrbar gelagert ist. Anwendung finden derartige Vorrichtungen insbesondere als Streckvorrichtungen für körperliche Gegenstände, insbesondere für Metallplatten. Mit Hilfe derartiger Streckvorrichtungen werden beispielsweise Aluminiumplatten zwischen 1 und 5 % gelängt bzw. gereckt, um innere Spannungen abzubauen, die sich negativ auf das Materialverhalten auswirken.

Derartige Vorrichtungen sind im Stand der Technik grundsätzlich bekannt. Nachteilig bei den bekannten Vorrichtungen ist jedoch, dass bei großen Plattenlängen, die typischerweise mehrere Meter betragen (6-35 m sind keine Seltenheit), die zur Längung erforderlichen Hohlzylinder sehr groß bzw. lang und somit teuer sind. Die große erforderliche Länge der Zylindereinheit ist bei den Vorrichtungen im Stand der Technik auch dadurch begründet, dass der innere Zylinder typischerweise zur Abstützung des äußeren Hohlkolbens dient, weshalb im Stand der Technik der innere Zylinder und der äußere Hohlkolben nur so weit gegeneinander verfahren werden können, wie ein Ende des inneren Zylinders noch innerhalb des äußeren Hohlkolbens verbleibt.

Die US 2007/0057119 A1 offenbart eine Kolben-Verriegelungseinrichtung, bei der eine Abstützeinrichtung für einen äußeren Kolben und ein innerer Zylinder 21 einstückig ausgebildet sind. Deshalb fehlt es an jeglicher Kupplungseinrichtung zwischen den beiden letztgenannten Elementen.

Die EP 0 940 584 A2 offenbart eine Vorrichtung mit einer Kolbenstange, mit einem die Kolbenstange umgebenden inneren Zylinder und mit einem die Kolbenstange ebenfalls umgebenden äußeren Hohlplunger. Dabei ist der innere Zylinder innerhalb des äußeren Hohlplungers relativ zu dem äußeren Hohlplunger auf der Kolbenstange axial verfahrbar gelagert. Der innere Zylinder ist auch außerhalb des äußeren Hohlplungers relativ zu dem äußeren Hohlplunger auf der Kolbenstange axial verfahrbar gelagert. Der äußere Hohlplunger weist zumindest an seinem einen Ende einen ersten, vorzugsweise ringförmigen Anschlag auf zum Begrenzen der axialen Verfahrbarkeit der Abstützeinrichtung auf einen Bereich innerhalb des Hohlplungers. Weiterhin sieht die Vorrichtung der EP 0 940 584 A2 eine ebenfalls auf der Kolbenstange axial verfahrbar gelagerte becherförmige Abstützeinrichtung vor mit einem sich radial zu der Kolbenstange erstreckenden Boden zum Abstützen des äußeren Hohlplungers gegenüber der Kolbenstange. Schließlich ist eine Kupplungseinrichtung vorgesehen zum An- oder Abkuppeln des inneren Zylinders an die oder von der Abstützeinrichtung.

Ausgehend von diesem Stand der Technik liegt der Erfindung die Aufgabe zugrunde, für eine bekannte Vorrichtung der genannten Art eine alternative Kupplungseinrichtung bereitzustellen zum An- oder Abkuppeln eines inneren Zylinders an oder von einer Abstützeinrichtung.

Diese Aufgabe wird vorrichtungstechnisch durch den Gegenstand des Anspruchs 1 gelöst.

Die beanspruchte Abstützeinrichtung übernimmt somit die Funktion des Abstützens des äußeren Hohlkolbens, auch Hohlplunger genannt, gegenüber der Kolbenstange, die im Stand der Technik zum Teil von dem inneren Zylinder übernommen wurde. Die beanspruchte Abstützeinrichtung ermöglicht vorteilhafterweise ein Verfahren des inneren Zylinders nach vollständig außerhalb des äußeren Hohlkolbens, weil die Abstützfunktion auch in diesem Fall von der Abstützeinrichtung übernommen wird.

Der Begriff "axial" meint in der vorliegenden Beschreibung entlang der Längsachse der Kolbenstange oder parallel dazu.

Der Begriff "innerhalb" des äußeren Hohlkolbens meint "im Inneren" bzw. "in dem von dem äußeren Hohlkolben aufgespannten Hohlraum / Volumen" abzüglich dem Volumen der Kolbenstange. Bei einem Verfahren des inneren Zylinders innerhalb des äußeren Hohlkolbens überlappen sich beide zumindest teilweise. Bei einem Verfahren des inneren Zylinders nach außerhalb des äußeren Hohlkolbens wird die Überlappung zunehmen geringer bis schließlich - wenn sich der innere Zylinder vollständig außerhalb als äußeren Hohlkolbens befindet - keine Überlappung mehr vorliegt.

Der äußere Hohlkolben weist zumindest an einem seiner Enden einen ersten vorzugsweise ringförmigen Anschlag auf zum Begrenzen der axialen Verfahrbarkeit der Abstützeinrichtung auf einen Bereich innerhalb des äußeren Hohlkolbens. Der erste Anschlag bietet den Vorteil, dass die Abstützeinrichtung nicht nach außerhalb des äußeren Hohlkolbens verfahren werden kann, wodurch die Abstützfunktion der Abstützeinrichtung, d. h. das Abstützen des äußeren Hohlkolbens gegenüber der Kolbenstange, immer gewährleistet bleibt, auch wenn der innere Zylinder vollständig nach außerhalb des äußeren Hohlkolbens axial verfahren wird.

Es ist eine Kupplungseinrichtung vorgesehen zum Ankuppeln des inneren Zylinders an die Abstützeinrichtung oder zum Abkuppeln des inneren Zylinders von der Abstützeinrichtung. Diese Kupplungseinrichtung ermöglicht vorteilhafterweise ein automatisches bzw. selbstständiges Ankoppeln des inneren Zylinders an die innerhalb des äußeren Hohlkolbens befindliche Abstützeinrichtung, wenn der innere Zylinder - von außerhalb des äußeren Hohlkolbens kommend - axial in den äußeren Hohlkolben hineinverfahren wird. Weiterhin ist die Kupplungseinrichtung so ausgebildet, dass sie ein automatisches bzw. selbstständiges Abkuppeln des inneren Zylinders von der Abstützeinrichtung bewirkt, wenn ein erster Anschlag erreicht ist, insbesondere wenn der innere Zylinder so weit nach außerhalb des äußeren Hohlkolbens verfahren wird, dass sich ihre Enden nicht mehr überlappen. Die Kupplungseinrichtung ist dabei vorteilhafterweise so ausgebildet, dass das Abkuppeln so rechtzeitig erfolgt, dass der Verbleib der Abstützeinrichtung im Inneren des äußeren Hohlkolbens immer gewährleistet ist.

Der Vorteil der erfindungsgemäßen im Inneren des äußeren Hohlkolbens befindlichen Abstützeinrichtung liegt in der kompakten und somit preisgünstigen Baugröße gegenüber einer außenliegenden Abstützung. Eine außenliegende Abstützung wäre zudem mit aufwändigem Sicherheitsequipment gegen Fehlbedienung auszustatten, sowohl hardware- als auch softwaretechnisch.

Das An- und Ankuppeln erfolgt vorteilhafterweise automatisch bzw. selbstständig während des normalen Betriebs der Vorrichtung, ohne dass es dafür einer besonderen Ansteuerung bedarf; d. h. es erfolgt unabhängig von der Verfahrenstechnik.

Gemäß einem ersten Ausführungsbeispiel sind die äußeren Abmessungen und die Form des äußeren Querschnitts der Abstützeinrichtung zumindest im Wesentlichen den Abmessungen und der Form des inneren Querschnitts des äußeren Hohlkolbens entsprechend ausgebildet. Durch diese entsprechende, d. h. formkomplementäre Gestaltung der Abstützeinrichtung wird sichergestellt, dass sich die radiale Relativposition zwischen äußerem Hohlkolben und Kolbenstange zumindest nicht wesentlich ändert, auch wenn der innere Zylinder vollständig nach außerhalb des äußeren Hohlkolbens verfahren ist. Weiterhin wird dadurch sichergestellt, dass der innere Zylinder auch wieder nach innerhalb des äußeren Hohlkolbens axial verfahrbar ist, wenn dies gewünscht sein sollte. Ansonsten, wenn die Abstützeinrichtung nicht die besagten Abmessungen aufweisen würde, bestünde die Gefahr, dass ein Hineinfahren des inneren Zylinders in den äußeren Hohlkolben nicht mehr möglich wäre, weil die Einfahrt des inneren Zylinders in den äußeren Hohlkolben dann durch den in Richtung Kolbenstange herabgefallenen äußeren Hohlkolben blockiert wäre.

Konkrete Ausgestaltungen der Vorrichtung, insbesondere der Kupplungseinrichtung, sind Gegenstand der abhängigen Ansprüche.

Der Beschreibung sind insgesamt 6 Figuren beigefügt, wobei
- Figur 1: die erfindungsgemäße Vorrichtung mit dem inneren Zylinder angekuppelt an die Abstützeinrichtung;
- Figur 2: die erfindungsgemäße Kupplungseinrichtung aus Figur 1 im Detail;
- Figur 3: den ein Stück weiter nach außerhalb des äußeren Hohlkolbens verfahrenen inneren Zylinder bei geöffneter Kupplungseinrichtung;
- Figur 4: die geöffnete Kupplungseinrichtung gemäß Figur 3 im Detail mit noch weiter nach außerhalb des äußeren Hohlkolbens verfahrenem inneren Zylinder;
- Figur 5: die Relativposition von innerem Zylinder, äußerem Hohlkolben und der Abstützeinrichtung gemäß Figur 4 in größerem Zusammenhang; und
- Figur 6: die Konstellation von innerem Zylinder, äußerem Hohlkolben und Abstützeinrichtung mit geschlossener Kupplungseinrichtung nach einem Wiedereinfahren des inneren Zylinders in den äußeren Hohlkolben
zeigt.

Die Erfindung wird nachfolgend in Form von Ausführungsbeispielen unter Bezugnahme auf die genannten Figuren detailliert beschrieben.

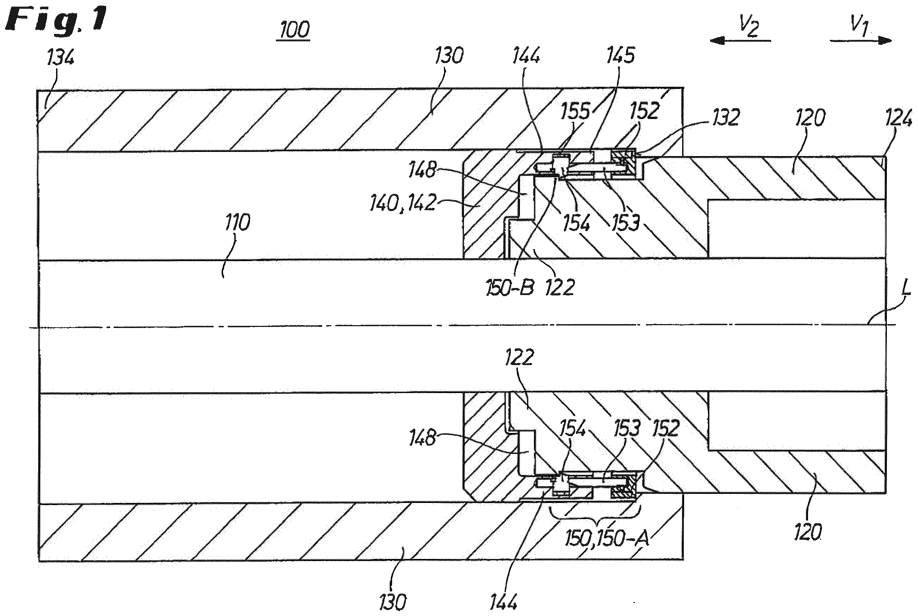

Figur 1 zeigt die erfindungsgemäße Vorrichtung 100, die als Kolbeneinheit im Wesentlichen aus ineinander geschachtelten Kolben 130 und Zylindern 120 besteht. Konkret umfasst die Vorrichtung 100 eine typischerweise feststehende Kolbenstange 110 und einen die Kolbenstange umgebenden inneren Zylinder 120. Die Kolbenstange ist radial weiter außen, zumindest abschnittsweise, weiterhin umgeben von einem äußeren Hohlkolben 130, auch Hohlplunger genannt. Der innere Zylinder 120 ist innerhalb und außerhalb des äußeren Hohlkolbens 130 relativ zu diesem auf der Kolbenstange 110 axial verfahrbar gelagert.

Die erfindungsgemäße Vorrichtung 100 weist darüber hinaus eine Abstützeinrichtung 140 auf, welche ebenfalls im Inneren des äußeren Hohlkolbens 130 auf der Kolbenstange 110 axial verfahrbar gelagert ist. Die Abstützeinrichtung 140 ist becherförmig ausgestaltet und weist neben einem sich radial zu der Kolbenstange 110 erstreckenden Boden 142 eine zylinderförmige Wand 144 auf, welche an der Peripherie des Bodens 142 an diesen angeformt ist. Der Boden 142 dient zusammen mit der zylinderförmigen Wand 144 zum Abstützen des äußeren Hohlkolbens 130 gegenüber der Kolbenstange 110. Wenn die Vorrichtung 100 fertig montiert ist, ist die becherförmige Abstützeinrichtung 140 koaxial zur Kolbenstange 110 angeordnet, d. h. ihre Rotationsachse bzw. Längsachse fällt vorzugsweise mit der Längsachse L der Kolbenstange 110 zusammen. Zu diesem Zweck ist der Boden 142 der Abstützeinrichtung 140 in Form einer Lochscheibe mit einem Loch ausgebildet, durch welches die Kolbenstange 110 hindurchgeführt ist. Die zylinderförmige Wand 144 der Abstützeinrichtung 140 umgibt die Kolbenstange 110 dann koaxial.

Der äußere Hohlkolben 130 weist zumindest an einem Ende einen ersten vorzugsweise ringförmigen Anschlag 132 auf. Der erste Anschlag 132 ragt in das Innere des äußeren Hohlkolbens 130 hinein und dient zum Begrenzen der axialen Verfahrbarkeit der Abstützeinrichtung 140 auf einen Bereich innerhalb des äußeren Hohlkolbens 130. Die becherförmige Abstützeinrichtung 140 ist derart auf der Kolbenstange 110 verfahrbar gelagert, dass sie zu dem ersten Anschlag 132 hin geöffnet ist; anders ausgedrückt, der von der becherförmigen Abstützeinrichtung 140 aufgespannte Hohlraum 148 ist zu demjenigen Ende des äußeren Hohlkolbens 130, an welchem sich der erste Anschlag 132 befindet, hin geöffnet.

Der von der becherförmigen Abstützeinrichtung 140 aufgespannte Hohlraum 148 ist bezüglich seiner Abmessungen und seines Querschnitts so ausgebildet, dass er das Ende 122 des inneren Zylinders 120 aufnehmen kann. Damit das eine Ende 122 des inneren Zylinders 120 in den Hohlraum 148 eingeführt werden kann, ist der Außendurchmesser des inneren Zylinders 120 an diesem Ende 122 notwendigerweise geringfügig kleiner ausgestaltet als der Innendurchmesser des Hohlraums 148. Erforderlichenfalls ist dieser Außendurchmesser am Ende 122 kleiner als der sonstige Außendurchmesser des inneren Zylinders 120 ausgebildet.

Die erfindungsgemäße Vorrichtung 100 weist weiterhin eine Kupplungseinrichtung 150 auf zum Ankuppeln des inneren Zylinders 120 an die Abstützeinrichtung 140 oder zum Abkuppeln des inneren Zylinders 120 von der Abstützeinrichtung 140. Konkret weist die Kupplungseinrichtung 150 eine abstützeinrichtungsseitige Kupplungshälfte 150-A sowie eine dem inneren Zylinder zugeordnete Kupplungshälfte 150-B auf.

Die abstützeinrichtungsseitige Kupplungshälfte 150-A ist zumindest weitgehend in die zylinderförmige Wand 144 der Abstützeinrichtung 140 integriert. Sie umfasst mindestens ein Anschlagselement 152, welches das bodenferne Ende der zylinderförmigen Wand 144 repräsentiert. Mit dem mindestens einen Anschlagselement 152 ist ein Verschiebeelement 153, z. B. eine Verschiebestange, verbunden zum Führen einer axialen Verschiebung des Anschlagselementes 152 gegenüber einer bodenfernen Stirnseite 145 der zylinderförmigen Wand 144. Weiterhin umfasst die abstützeinrichtungsseitige Kupplungshälfte 150-A mindestens ein mit dem Verschiebeelement 153 in Wirkverbindung stehendes Stiftelement 154, welches in der zylinderförmigen Wand 144 radial verschiebbar geführt ist. Die radiale Verschiebposition des Stiftelementes 154 bestimmt sich nach Maßgabe der axialen Verschiebeposition des Verschiebeelementes 153. Typischerweise sind eine Mehrzahl, beispielsweise acht, der Stiftelemente 154 am Umfang der Abstützeinrichtung 140 verteilt angeordnet. Schließlich umfasst die abstützeinrichtungsseitige Kupplungshälfte 150-A mindestens ein Vorspannelement 155, z. B. in Form einer Feder, zum radialen Vorspannen des mindestens einen Stiftelementes 154 in eine radiale Normalverschiebeposition, in welcher ein Ende des Stiftelementes 154 über die zylinderförmige Wand 144 hinaus in den von der becherförmigen Abstützeinrichtung 140 aufgespannten Hohlraum 148 hineinragt. Die abstützeinrichtungsseitige Kupplungshälfte 150-A bildet mit ihren vielen soeben genannten Einzelteilen sowie zusammen mit der zylinderförmigen Wand 144 und dem Boden 142 eine Einheit in Form der besagten Abstützeinrichtung 140.

Die an dem in die Abstützeinrichtung 140 einführbaren Ende 122 des inneren Zylinders 120 befindliche Kupplungshälfte 150-B ist in Form eines zweiten, vorzugsweise ringförmigen Anschlags ausgebildet. Der zweite Anschlag 150-B ist mit dem mindestens einen Stiftelement 154 lösbar in Eingriff bringbar.

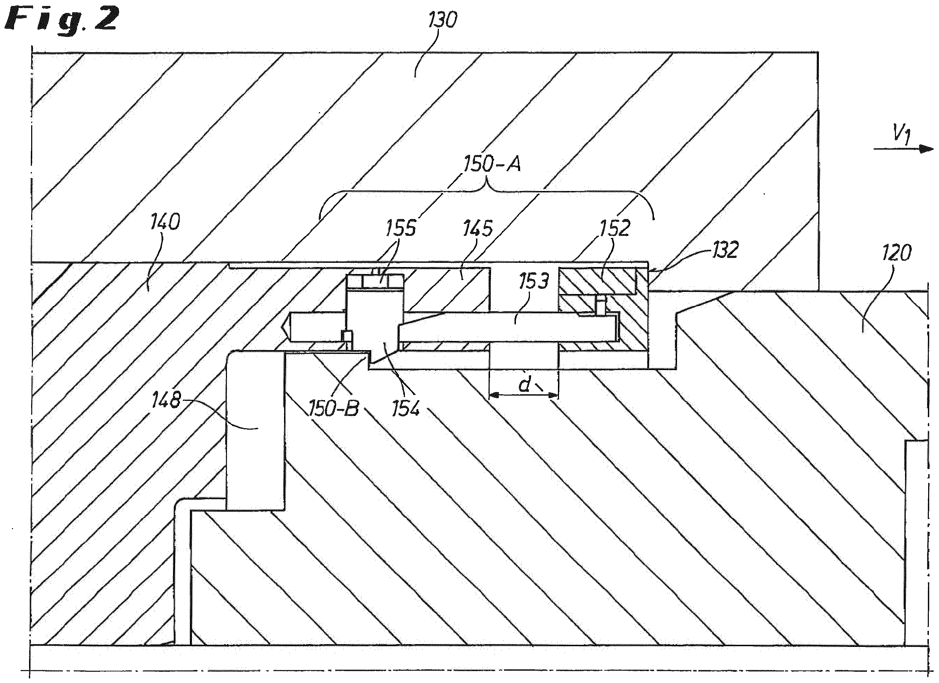

Zu diesem Zweck weist das mindestens eine Stiftelement 154 an seinem dem Hohlraum 148 zugewandten Ende eine zum Boden 142 hin scharfkantige, vorzugsweise rechtwinklige Kontur auf zum Eingreifen des zweiten Anschlags 150-B. Demgegenüber weist das Stiftelement 154 an seinem dem Hohlraum 148 zugewandten Ende zur Becheröffnung hin eine abgeschrägte Fläche auf; siehe z. B. Figur 2.

Nachfolgend wird der Betrieb der soeben beschriebenen Vorrichtung 100 unter Bezugnahme auf die Figuren 2 bis 6 näher erläutert.

Figur 2 zeigt einen vergrößerten Ausschnitt der Figur 1, in welchem insbesondere die Kupplungseinrichtung 150 besser zu erkennen ist. Beide Figuren 1 und 2 stellen eine Situation dar, bei welcher die erfindungsgemäße Abstützeinrichtung 140 zwischen dem äußeren Hohlkolben 130 und der Kolbenstange 110 angeordnet ist. Gleichzeitig ist der innere Zylinder 120 mit seinem einen Ende 122 in den von der becherförmigen Abstützeinrichtung 140 aufgespannten Hohlraum 148 eingefahren bzw. von diesem aufgenommen und über die geschlossene Kupplungseinrichtung 150 an die becherförmige Abstützeinrichtung 140 angekuppelt. Der angekuppelte Zustand ist in Figur 2 daran zu erkennen, dass die scharfkantige rechtwinklige Kontur an dem dem Hohlraum 148 zugewandten Ende des Stiftelementes 154 mit dem zweiten Anschlag 150-B in Eingriff steht bzw. diesen hintergreift.

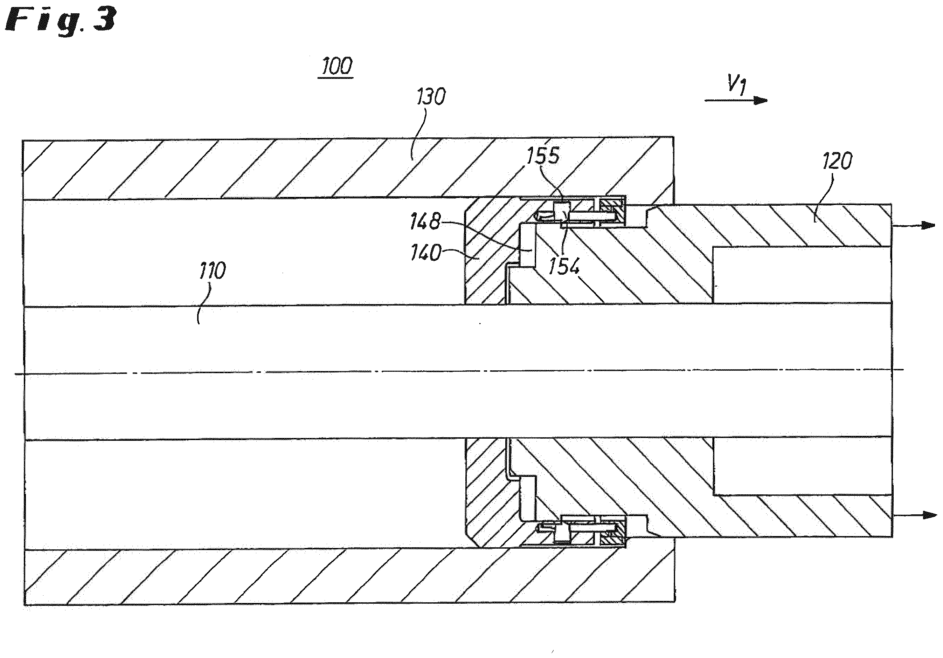

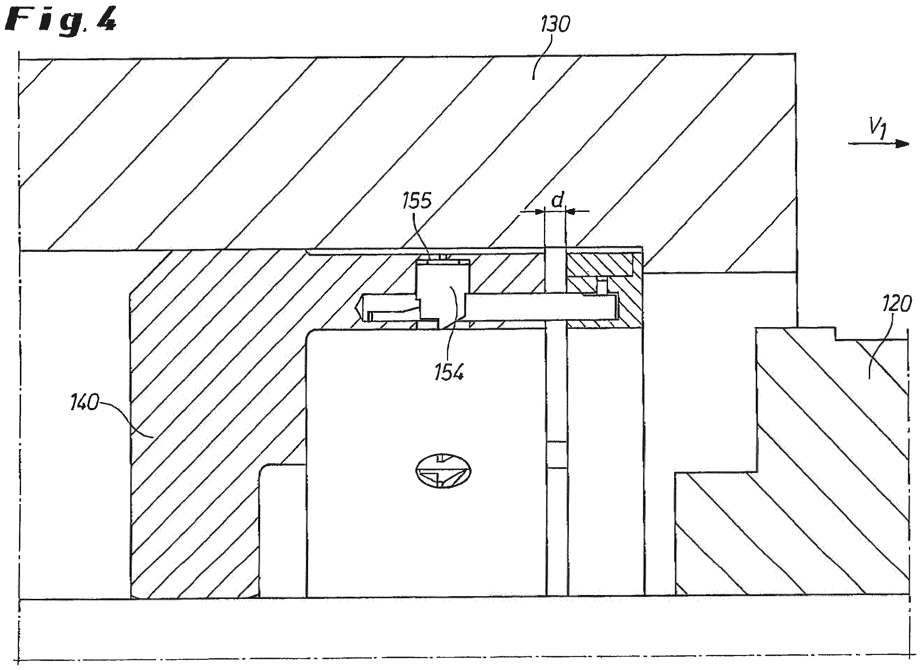

Wenn nun, ausgehend von der in Figur 2 gezeigten Situation ein axiales Verfahren des inneren Zylinders 120 nach außerhalb des äußeren Hohlkolbens 130 in Richtung V1 erfolgt, wie dies in den Figuren 3 und 4 gezeigt ist, wird die an den inneren Zylinder 120 angekuppelte Abstützeinrichtung 140 auf der Kolbenstange 110 mit verfahren. Dabei schlägt zunächst das Anschlagselement 152 an den ersten Anschlag 132 des äußeren Hohlkolbens 130 an, wie dies in Figur 2 gezeigt ist. Bei einem weiteren axialen Verfahren des inneren Zylinders 120 mit der angekuppelten Abstützeinrichtung 140 nach außerhalb des äußeren Hohlkolbens 130 in Richtung V1 verringert sich der Abstand d zwischen dem Anschlagelement 152 und der bodenfernen Stirnseite 145 der zylinderförmigen Wand 144 zunehmend. Gleichzeitig wird das Stiftelement 154 zunehmend weiter auf das angeschrägte Verschiebeelement 153 geschoben. Durch das axiale Gleiten auf der Schräge des Verschiebeelementes 153 wird das Stiftelement 154 entgegen der radialen Vorspannkraft des Vorspannelementes 155 zunehmend weiter radial nach außen bewegt. Mit dieser Bewegung wird das Stiftelement 154 zunehmend weiter aus dem Hohlraum 148 zurückgezogen, bis es schließlich nicht mehr in den Hohlraum 148 hineinragt und dann auch nicht mehr mit dem zweiten Anschlag 150-B am Ende des inneren Zylinders 120 in Eingriff steht. Die Kupplung 150 ist dann in dieser in den Figuren 3 und 4 gezeigten Situation geöffnet. Der radiale Hubweg des Stiftelementes 154 zwischen seiner ausgefahrenen Stellung bei geschlossener Kupplung 150 (radiale Normalverschiebeposition) und einer zurückgezogenen Stellung bei geöffneter Kupplung 150 beträgt beispielsweise 10 mm. Der axiale Abstand d zwischen der bodenfernen Stirnseite 145 der zylinderförmigen Wand 144 und dem Anschlagselement 152 beträgt beispielsweise mindestens 10 mm und beispielsweise maximal 50 mm, so dass ein axialer Hub von beispielsweise 40 mm möglich ist. Der maximale Abstand d ist beispielsweise in Figur 2 gezeigt, während der minimale Abstand d beispielsweise in Figur 4 gezeigt ist.

Sobald die Kupplung 150 geöffnet ist, d. h. das Stiftelement 154 weit genug zurückgefahren ist, kann der innere Zylinder 120 auch aus dem Hohlraum 148 heraus noch weiter in Richtung V1 nach außerhalb des äußeren Hohlkolbens 130 verfahren werden, auch so weit, dass er sich nicht mehr im Bereich des äußeren Hohlkolbens 130 befindet. Trotzdem wird auch in diesem Fall aufgrund des beschriebenen automatischen Abkupplungsmechanismusses sichergestellt, dass die erfindungsgemäße Abstützeinrichtung 140 mit der abstützeinrichtungsseitigen Kupplungshälfte 150-A innerhalb des äußeren Hohlkolbens 130 verbleibt und damit ein Herabfallen des äußeren Hohlkolbens 130 auf die Kolbenstange 110 sicher verhindert wird.

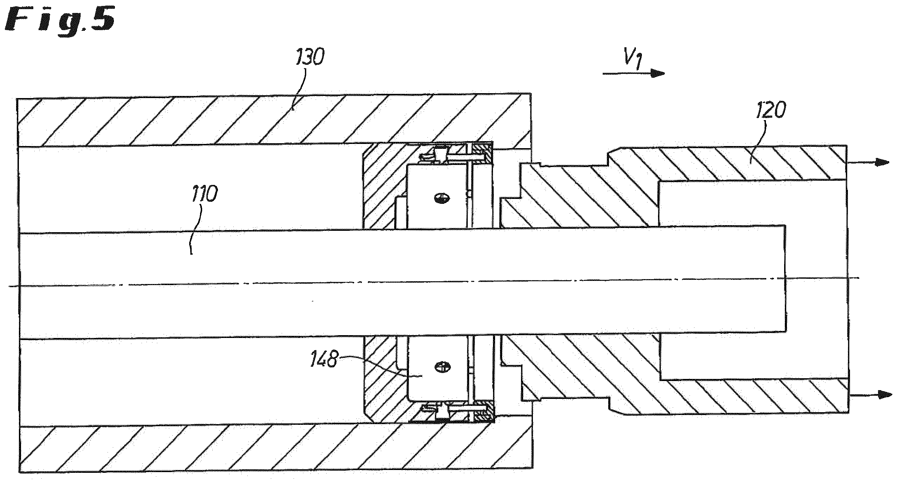

Figur 5 zeigt die bereits aus Figur 4 bekannte Konstellation zwischen äußerem Hohlkolben 130, der Abstützeinrichtung 140 und dem inneren Zylinder 120 in einem größeren Gesamtzusammenhang.

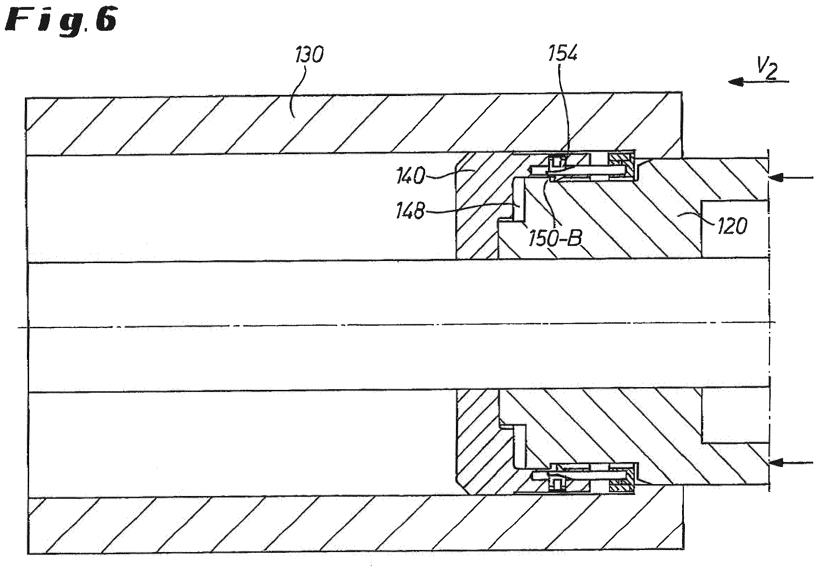

Figur 6 zeigt schließlich eine Konstellation der genannten Komponenten nach erneutem axialen Wiedereinfahren des von außerhalb kommenden inneren Zylinders 120 in Richtung V2 in den äußeren Hohlkolben 130 und in den Hohlraum 148 der becherförmigen Abstützeinrichtung 140. Wenn der innere Zylinder 120 gemäß Figur 6 von außerhalb des äußeren Hohlkolbens 130 kommend axial in den Hohlraum 148 einfährt, trifft das Ende 122 des inneren Zylinders zunächst auf die abgeschrägte Fläche des Stiftelementes 154, wie sie in Figur 2 zu erkennen ist. Durch eine weitere axiale Bewegung des inneren Zylinders 120 in Richtung Boden 142 wird dann das Stiftelement 154 durch das Ende 122 des inneren Zylinders 120 entgegen der radialen Federkraft des Vorspannelementes 155 radial nach außen gefahren, so dass eine weitere Einfahrt des inneren Zylinders 120 in Richtung Boden 142 in den Hohlraum 148 möglich ist. Sobald der innere Zylinder 120 weit genug in den Hohlraum 148 eingefahren ist, schnappt das Stiftelement 154 aufgrund der von den Vorspannelementen 155 aufgebrachten radialen Vorspannkraft hinter dem zweiten Anschlag 150-B ein, wodurch die Kupplung 150 geschlossen wird und der innere Zylinder 120 wieder an die Abstützeinrichtung 140 angekoppelt ist. Es liegt dann die Ausgangssituation gemäß den Figuren 1 und 2 wieder vor und die genannten Verfahrensschritte könnten wiederholt werden.

### Bezugszeichenliste

- 100: Vorrichtung
- 110: Kolbenstange
- 120: innerer Zylinder
- 122: Ende
- 124: Ende
- 130: äußerer Hohlkolben
- 132: Anschlag
- 134: Ende
- 140: Abstützeinrichtung
- 142: Boden
- 144: zylinderförmige Wand
- 145: Stirnseite
- 148: Hohlraum
- 150: Kupplungseinrichtung
- 150-A: abstützeinrichtungsseitige Kupplungshälfte
- 150-B: dem inneren Zylinder zugeordnete Kupplungshälfte
- 152: Anschlagselement
- 153: Verschiebeelement
- 154: Stiftelement
- 155: Vorspannelement
- d: Abstand
- L: Längsachse
- V1: Verfahrrichtung nach außerhalb des äußeren Hohlkolbens
- V2: Verfahrrichtung (von außerhalb kommend) in den äußeren Hohlkolben hinein

## Patentansprüche

1. Vorrichtung (100) aufweisend:
eine Kolbenstange (110);
einen die Kolbenstange (110) umgebenden inneren Zylinder;
einen die Kolbenstange (110) ebenfalls umgebenden äußeren Hohlplunger (130), wobei der innere Zylinder (120) innerhalb und außerhalb des äußeren Hohlplungers (130) relativ zu dem äußeren Hohlplunger (130) auf der Kolbenstange (110) axial verfahrbar gelagert ist, und wobei der äußere Hohlplunger (130) zumindest an seinem einen Ende einen ersten vorzugsweise ringförmigen Anschlag (132) aufweist zum Begrenzen der axialen Verfahrbarkeit einer Abstützeinrichtung (140) auf einen Bereich innerhalb des äußeren Hohlplungers (130),
wobei die Abstützeinrichtung (6) ebenfalls auf der Kolbenstange (110) axial verfahrbar gelagert ist und mit einem sich radial zu der Kolbenstange (110) erstreckenden Boden (142) zum Abstützen des äußeren Hohlplungers (130) gegenüber der Kolbenstange (110) versehen ist, wobei die Abstützeinrichtung (140) in Form eines Bechers ausgebildet ist und neben dem Boden (142) eine zylinderförmige Wand (144) aufweist, welche an den Boden angeformt ist; und wobei die becherförmige Abstützeinrichtung (140) derart auf der Kolbenstange (110) gelagert ist, dass die zylinderförmige Wand (144) die Kolbenstange (110) umgibt und der Becher zu dem ersten Anschlag (132) am Ende des äußeren Hohlplungers (130) hin geöffnet ist, so dass der Boden (142) bei jeder möglichen axialen Verfahrposition der Abstützeinrichtung (140) innerhalb des äußeren Hohlplungers (130) verbleibt und dass ggf. das bodenferne Ende der zylinderförmigen Wand an den ersten Anschlag (132) des äußeren Hohlkolbens anschlägt; und
eine Kupplungseinrichtung (150) mit mindestens einem Stiftelement (154) zum An- oder Abkuppeln des inneren Zylinders (120) an die oder von der Abstützeinrichtung (140), wobei die Kupplungseinrichtung (150) eine abstützeinrichtungsseitige Kupplungshälfte (150-A) aufweist, welche in die zylinderförmige Wand (144) der Abstützeinrichtung (140) integriert ist;
**dadurch gekennzeichnet,**
**dass** die zylinderförmige Wand (144) an der Peripherie des Bodens (142) an diesen angeformt ist; und
**dass** die abstützeinrichtungsseitige Kupplungshälfte (150-A) aufweist:
mindestens ein Anschlagselement (152), welches das bodenferne Ende der zylinderförmigen Wand (144) präsentiert;
ein mit dem Anschlagselement (152) verbundenes Verschiebelement (153) zum Führen des Anschlagelements (152) bei einer axialen Verschiebung gegenüber einer bodenfernen Stirnseite (145) der zylinderförmigen Wand (144), wobei das mindestens eine Stiftelement (154) mit dem Verschiebeelement (153) in Wirkverbindung steht und in der zylinderförmigen Wand (144) radial verschiebbar geführt ist, wobei sich die radiale Verschiebeposition des Stiftelementes (154) nach Maßgabe der axialen Verschiebeposition des Verschiebeelementes (153) bestimmt; und
mindestens ein Vorspannelement (155), zum Beispiel in Form einer Feder zum radialen Vorspannen des Stiftelementes (154) in eine radiale Normalverschiebeposition, in welcher ein Ende des Stiftelementes (154) über die zylinderförmige Wand (144) hinaus in den von der becherförmigen Abstützeinrichtung (140) aufgespannten Hohlraum (148) hineinragt.

2. Vorrichtung (100) nach Anspruch 1;
**dadurch gekennzeichnet,**
**dass** der Außendurchmesser an dem der Abstützeinrichtung (140) zugewandten Ende (122) des inneren Zylinders (120) derart ausgebildet, erforderlichen falls verjüngt ist, dass der innere Zylinder (120) in den von der becherförmigen Abstützeinrichtung (140) aufgespannten Hohlraum (148) einführbar ist.

3. Vorrichtung (100) nach Anspruch 1 und 2,
**dadurch gekennzeichnet,**
**dass** die Kupplungseinrichtung (150) weiterhin eine dem inneren Zylinder (120) zugeordnete Kupplungshälfte (150-B) aufweist, welche ausgebildet ist in Form eines zweiten, vorzugsweise ringförmigen Anschlags an dem in die Abstützeinrichtung (140) einführbaren Ende (122) des inneren Zylinders (120), wobei der zweite Anschlag (150-B) mit dem Stiftelement (154) lösbar in Ein griff bringbar ist, wenn das der Abstützeinrichtung (140) zugewandte Ende (122) des inneren Zylinders (120) weit genug in den Hohlraum (148) der Abstützeinrichtung (140) eingeführt ist.

4. Vorrichtung (100) nach Anspruch 3,
**dadurch gekennzeichnet,**
**dass** das Stiftelement (154) an seinem dem Hohlraum (148) zugewandten Ende eine zur Becheröffnung hin abgeschrägte Fläche und eine zum Boden (142) hin scharfkantige, vorzugsweise rechtwinkelige Kontur aufweist, letztere zum Eingreifen des zweiten Anschlags (150-B).

5. Vorrichtung (100) nach einem der vorangegangenen Ansprüche,
**dadurch gekennzeichnet, dass**
dass die äußeren Abmessungen und die Form des Querschnitts des Bodens (142) der Abstützeinrichtung (140) zumindest im Wesentlichen den Abmessungen und der Form des inneren Querschnitts des äußeren Hohlplungers (130) entsprechend ausgebildet sind.

6. Vorrichtung (100) nach einem der vorangegangenen Ansprüche,
**dadurch gekennzeichnet,**
**dass** der Boden (140) in Form einer Lochscheibe ausgebildet ist, wobei die Kolbenstange (110) durch das Loch in der Lochscheibe hindurchgeführt ist.

## Claims

1. Device (100) comprising:
a piston rod (110);
an inner cylinder surrounding the piston rod (110);
an outer hollow plunger (130) similarly surrounding the piston rod (110), wherein the inner cylinder (120) is mounted on the piston rod (110) to be axially movable inside and outside the outer hollow plunger (130) relative to the outer hollow plunger (130) and wherein the outer hollow plunger (130) has at at least one end thereof a first, preferably annular, abutment (132) for limiting axial mobility of a support device (140) to a region within the outer hollow plunger (130),
wherein the support device (6) is similarly mounted on the piston rod (110) to be axially movable and is provided with a base (142), which extends radially relative to the piston rod (110), for supporting the outer hollow plunger (130) relative to the piston rod (110),
wherein the support device (140) has a configuration in the form of a cup and has adjacent to the base (142) a cylindrical wall (144) integrally formed at the base; and wherein the cup-shaped support device (140) is so mounted on the piston rod (110) that the cylindrical wall (144) surrounds the piston rod (110) and the cup is open towards the first abutment (132) at the end of the outer hollow plunger (130) so that the base (142) in any possible axial movement position of the support device (140) remains within the outer hollow plunger (130) and that the end, which is remote from the base, of the cylindrical wall in a given case abuts the first abutment (132) of the outer hollow piston;
and
a coupling device (150) with at least one pin element (154) for coupling or decoupling the inner cylinder (120) to or from the support device (140), wherein the coupling device (150) comprises a coupling half (150-A) which is on the side of the support device and is integrated in the cylindrical wall (144) of the support device (140),
**characterised in that**
the cylindrical wall (144) at the periphery of the base (142) is integrally formed therewith; and
the coupling half (150-A) on the side of the support device comprises:
at least one abutment element (152) which represents the end, which is remote from the base, of the cylindrical wall (144);
a displacing element (153), which is connected with the abutment element (152), for guiding the abutment element (152) in the case of axial displacement relative to an end face (145), which is remote from the base, of the cylindrical wall (144), wherein the at least one pin element (154) is disposed in operative connection with the displacing element (153) and is guided in the cylindrical wall (144) to be radially displaceable, wherein the radial displacement position of the pin element (154) is determined in dependence on the axial displacement position of the displacing element (153); and
at least one biasing element (155), for example in the form of a spring, for radial biasing of the pin element (154) into a radial normal displacement position, in which an end of the pin element (154) projects beyond the cylindrical wall (144) into the cavity (148) spanned by the cup-shaped support device (140).

2. Device (100) according to claim 1, **characterised in that** the outer diameter at the end (122), which faces the support device (140), of the inner cylinder (120) is formed in such a way, if required narrowed, that the inner cylinder (120) is introducible into the cavity (148) spanned by the cup-shaped support device (140).

3. Device (100) according to claim 1 and 2, **characterised in that** the coupling device (150) further comprises a coupling half (150-B) which is associated with the inner cylinder (120) and which is constructed in the form of a second, preferably annular, abutment at the end (122), which is introducible into the support device (140) of the inner cylinder (120), wherein the second abutment (150-B) can be brought into releasable engagement with the pin element (154) when the end (122), which faces the support device (140), of the inner cylinder (120) is introduced to a sufficient extent into the cavity (148) of the support device (140).

4. Device (100) according to claim 3, **characterised in that** the pin element (154) has at its end facing the cavity (148) a chamfered surface facing towards the cup opening and a sharp-edged, preferably right-angled, contour towards the base (142), the contour being for engagement of the second abutment (150-B).

5. Device (100) according to any one of the preceding claims, **characterised in that** the outer dimensions and the shape of the cross-section of the base (142) of the support device (140) are formed at least substantially in correspondence with the dimensions and shape of the inner cross-section of the outer hollow plunger (130).

6. Device (100) according to any one of the preceding claims, **characterised in that** the base (140) is constructed in the form of an apertured disc, wherein the piston rod (110) is led through the hole in the apertured disc.

## Revendications

1. Dispositif (100) présentant :
une tige de piston (110) ;
un cylindre interne qui entoure la tige de piston (110) ;
un piston plongeur creux externe (130) qui entoure également la tige de piston (110) ; dans lequel le cylindre interne (120) est monté de manière à pouvoir être déplacé en direction axiale à l'intérieur et à l'extérieur du piston plongeur creux externe (130) par rapport au piston plongeur creux externe (130) sur la tige de piston (110) ; et dans lequel le piston plongeur creux externe (130) présente au moins à sa première extrémité, une première butée (132) qui possède de préférence une configuration de forme annulaire, destinée à limiter la capacité de déplacement axial d'un mécanisme de soutien (140) dans une zone à l'intérieur du piston plongeur creux externe (130) ; dans lequel le mécanisme de soutien (6) est également monté de manière à pouvoir être déplacé en direction axiale sur la tige de piston (110) et est muni d'une base (142) s'étendant en direction radiale dans la direction de la tige de piston (110), pour que vienne s'y appuyer le piston plongeur creux externe (130) par rapport à la tige de piston (110) ; dans lequel le mécanisme de soutien (140) est réalisé sous la forme d'une coupelle et présente, à côté de la base (142), une paroi (144) possédant une configuration de forme cylindrique, qui est disposée via un surmoulage contre la base ; et dans lequel le mécanisme de soutien (140) possédant une configuration en forme de coupelle est monté sur la tige de piston (110) d'une manière telle que la paroi (144) possédant une configuration de forme cylindrique entoure la tige de piston (110) et la coupelle est ouverte en direction de la première butée (132) à l'extrémité du piston plongeur creux externe (130), de telle manière que la base (142), à chaque position de déplacement axial possible du mécanisme de soutien (140), reste à l'intérieur du piston plongeur creux externe (130), et en ce que, le cas échéant, l'extrémité éloignée de la base, de la paroi possédant une configuration de forme cylindrique vient buter contre la première butée (132) du piston creux externe ; et
un mécanisme d'accouplement (150) comprenant au moins un élément (154) en forme de broche pour l'accouplement ou le désaccouplement du cylindre interne (120) au mécanisme de soutien (140) ou à partir de ce dernier; dans lequel le mécanisme d'accouplement (150) présente une moitié d'accouplement du côté du mécanisme de soutien (150-A) qui est intégrée dans la paroi (144) possédant une configuration de forme cylindrique du mécanisme de soutien (140) ;
**caractérisé**
**en ce que** la paroi (144) possédant une configuration de forme cylindrique contre la périphérie de la base est surmoulée contre cette dernière ; et
**en ce que** moitié d'accouplement du côté du mécanisme de soutien (150-A) présente :
au moins un élément (152) faisant office de butée, qui présente l'extrémité de la paroi (144) possédant une configuration de forme cylindrique, éloignée de la base ;
un élément de déplacement (153) relié à l'élément (152) faisant office de butée, destiné au guidage de l'élément (152) faisant office de butée lors d'un déplacement axial par rapport à un côté avant (145) de la paroi (144) possédant une configuration de forme cylindrique, éloigné de la base ; dans lequel ledit au moins un élément (154) en forme de broche est mis en liaison fonctionnelle avec l'élément de déplacement (153) et est guidé de manière à pouvoir se déplacer en direction radiale dans la paroi (144) possédant une configuration de forme cylindrique ; dans lequel la position de déplacement radial de l'élément (154) en forme de broche se détermine en fonction de la position de déplacement axial de l'élément de déplacement (153) ; et
au moins un élément (155) procurant une mise en état de précontrainte, par exemple sous la forme d'un ressort, destiné à la mise en état de précontrainte, en direction radiale, de l'élément (154) en forme de broche dans une position de déplacement radial normale dans laquelle une extrémité de l'élément (154) en forme de broche fait saillie au-delà de la paroi (154) possédant une configuration de forme cylindrique pour pénétrer dans l'espace creux (148) maintenu à l'état tendu par le mécanisme de soutien (140) possédant une configuration en forme de coupelle.

2. Dispositif (100) selon la revendication 1, **caractérisé en ce que** le diamètre externe de l'extrémité (122) du cylindre interne (120), qui se tourne vers le mécanisme de soutien (140) est réalisé d'une manière telle que, lorsqu'il est soumis à rétrécissement en cas de nécessité, le cylindre interne (120) peut venir s'insérer dans l'espace creux (148) maintenu à l'état tendu par le mécanisme de soutien (140) possédant une configuration en forme de coupelle.

3. Dispositif (100) selon les revendication 1 et 2, **caractérisé en ce que** le mécanisme d'accouplement (150) présente en outre une moitié d'accouplement (150-B) attribuée au cylindre interne (120), qui est réalisée sous la forme d'une deuxième butée, possédant de préférence une configuration de forme annulaire, contre l'extrémité (122) du cylindre interne (120) qui peut venir s'insérer dans le mécanisme de soutien (140) ; dans lequel la deuxième butée (150-B) peut être amenée en engrènement de manière amovible avec l'élément (154) en forme de broche, lorsque l'extrémité (122) du cylindre interne (120), qui se tourne vers le mécanisme de soutien (140), est venu s'insérer suffisamment loin dans l'espace creux (148) du mécanisme de soutien (140).

4. Dispositif (100) selon la revendication 3, **caractérisé en ce que** l'élément (154) en forme de broche présente, contre son extrémité qui se tourne vers l'espace creux (148), une surface chanfreinée en direction de l'ouverture de la coupelle et un contour à arête vive, de préférence un contour un angle droit, en direction de la base (142), le contour en question étant destiné à venir s'engrener avec la deuxième butée (150-B).

5. Dispositif (100) selon l'une quelconque des revendications précédentes, **caractérisé en ce que** les dimensions externes et la forme de la section transversale de la base (142) du mécanisme de soutien (140) sont réalisées de manière correspondante, au moins à titre essentiel, aux dimensions et à la forme de la section transversale interne du piston plongeur creux externe (130).

6. Dispositif (100) selon l'une quelconque des revendications précédentes, **caractérisé en ce que** la base (140) est réalisée sous la forme d'un disque perforé ; dans lequel la tige de piston (110) est guidée à travers le trou pratiqué dans le disque perforé.
